# EUROPÄISCHE PATENTANMELDUNG

(11) **EP 2 878 832 A1**
(43) Veröffentlichungstag der Anmeldung: **03.06.2015**
(21) Anmeldenummer: 14190223.9
(22) Anmeldetag: 24.10.2014
(51) Int. Cl.: F16B 7/02, A24C 5/32

(54) **Maschine der Tabak verarbeitenden Industrie und Befestigungseinrichtung für ein Anbauteil auf einem Halteansatz einer Maschine der Tabak verarbeitenden Industrie**

(30) Priorität: 07.11.2013 DE 102013222615
(71) Anmelder: HAUNI Maschinenbau AG, 21033 Hamburg (DE)
(72) Erfinder: Kosorog, Roman, 92439 Bodenwöhr (DE); Meinke, Karsten, 23879 Mölln (DE); Schnabel, Wolfgang, 22113 Oststeinbek (DE); Jonat, Ilmar, 22159 Hamburg (DE); Wuttke, Nikolai, 21509 Glinde (DE)
(74) Vertreter: Müller Verweyen

(57) **Zusammenfassung**

Die vorliegende Erfindung betrifft eine Maschine der Tabak verarbeitenden Industrie mit
-wenigstens einem daran in einer vorbestimmten Sollposition gehaltenen Anbauteil (2), wobei
-ein der Maschine zugeordneter Halteansatz (3) mit zwei in einem Winkel zueinander stehenden ersten Anlageflächen (12,13) vorgesehen ist, und
-an dem Anbauteil (2) zwei in einem Winkel zueinander stehende, mit den ersten Anlageflächen (12,13) korrespondierende zweite Anlageflächen (14,15) vorgesehen sind, und
-das Anbauteil (2) mittels einer Klemmpaarung (25) mit wenigstens einer in Bezug zu einer Zustellrichtung (Z) eines Klemmteils (26) der Klemmpaarung (25) schiefwinkligen Klemmfläche (27) mit den zweiten Anlageflächen (14,15) auf den ersten Anlageflächen (12,13) des Halteansatzes (3) festlegbar ist.

## Beschreibung

Die Erfindung betrifft eine Maschine der Tabak verarbeitenden Industrie mit den Merkmalen des Oberbegriffs von Anspruch 1 und eine Befestigungseinrichtung für ein Anbauteil auf einem Halteansatz einer Maschine der Tabak verarbeitenden Industrie.

An einer Maschine der Tabak verarbeitenden Industrie sind verschiedene Anbauteile vorgesehen, welche bei einem Formatwechsel, d.h. bei einem Umrüsten der Maschine zur Produktion von Produkten eines unterschiedlichen Formates, ausgetauscht werden müssen und außerdem in einer sehr genauen Lagezuordnung zu der Maschine und deren Bauteilen angeordnet sein müssen. Unter dem Begriff der Produkte werden hier stabförmige Produkte, wie z.B. Filter oder Tabakstäbe, verstanden, welche zur Produktion von Zigaretten, Zigarillos oder dergleichen verwendet werden. Ferner werden unter dem Begriff der Produkte auch die fertigen Zigaretten, Zigarillos oder dergleichen verstanden. Die Produkte werden in einem ersten Schritt zu mindestens einem endlosen Strang geformt und dann in Produkte einer vorbestimmten Länge geschnitten. Zum Transport werden die geschnittenen Produkte in achsparallele Mulden von angetriebenen Transporttrommeln eingelegt und während der Drehbewegung der Transporttrommeln mittels eines Druckluftsystems in den Mulden gehalten bzw. mittels eines geringen Überdruckes an vorbestimmten Stellen des Umfanges an Mulden benachbarter Transporttrommeln übergeben.

Der endlose Strang wird dabei mit einer Stranggeschwindigkeit von bis zu 600 m/min und mehr transportiert, um eine entsprechend hohe Produktionskapazität der Maschine zu erreichen. Aufgrund der hohen Transportgeschwindigkeit und der dabei möglichst geringen Belastung der Produkte müssen die erforderlichen Anbauteile mit einer sehr hohen Positionsgenauigkeit zu der Strangformeinheit, dem Strang, den Transporttrommeln und zu den in den Mulden angeordneten Produkten positioniert sein.

Ein Beispiel eines solchen Anbauteiles ist die sogenannte Auskämmeinrichtung, wie sie z.B. in der DE 103 51 068 A1 beschrieben wurde. Die Auskämmeinrichtung dient dazu, die geführte Übergabe der Produkte aus den Mulden einer Transporttrommel zu den Mulden einer benachbarten Transporttrommel zu unterstützen. Die Auskämmeinrichtung umfasst mehrere Auskämmer, welche in den Transportweg der Produkte hineinragen und dadurch die Produkte durch ihre Formgebung und Ausrichtung aus den Mulden der ersten Transporttrommel heben und in die Mulden der zweiten Transporttrommel drängen. Sofern die Maschine zu einem Formatwechsel umgerüstet werden muss, müssen die Auskämmer einzeln ausgerichtet werden, was aufgrund der hohen erforderlichen Lagegenauigkeit sehr aufwendig ist.

Ferner müssen an der Maschine verschiedene weitere Anbauteile, wie z.B. Sensoren, Leimdüsen, Abschläger oder dergleichen, vorgesehen werden, welche ebenfalls mit einer sehr hohen Lagegenauigkeit zu dem Strang und zu den transportierten Produkten ausgerichtet sein müssen.

Sofern die Maschine zur Produktion von Produkten mit einem anderen Format, d.h. mit einer anderen Länge und/oder einem anderen Durchmesser umgerüstet werden soll, müssen die Anbauteile in ihrer Ausrichtung und Position neu eingestellt werden, wobei die Anbauteile im Extremfall auch demontiert und wieder montiert oder sogar gegen andere Anbauteile ausgetauscht werden müssen. In jedem Fall hängt der erforderliche Aufwand zum Umbau der Maschine entscheidend von dem Aufwand zur Ausrichtung und zum Austausch der Anbauteile ab.

Aufgabe der Erfindung ist es daher, eine Maschine der Tabak verarbeitenden Industrie zu schaffen, bei der der Austausch der Anbauteile erheblich einfacher und insbesondere in einer kürzeren Zeitspanne vorgenommen werden kann. Außerdem ist es Aufgabe der Erfindung, eine Befestigungsvorrichtung zu schaffen, durch welche der Austausch der Anbauteile vereinfacht werden kann.

Zur Lösung der Aufgabe wird erfindungsgemäß eine Maschine mit den Merkmalen des Anspruchs 1 und eine Befestigungsvorrichtung mit den Merkmalen des Anspruchs 12 vorgeschlagen. Weitere bevorzugte Weiterentwicklungen sind den Unteransprüchen, den Figuren und der zugehörigen Beschreibung zu entnehmen.

Gemäß dem Grundgedanken der Erfindung wird vorgeschlagen, dass ein der Maschine zugeordneter Halteansatz mit zwei in einem Winkel zueinander stehenden ersten Anlageflächen vorgesehen ist, und an dem Anbauteil zwei in einem Winkel zueinander stehende, mit den ersten Anlageflächen korrespondierende zweite Anlageflächen vorgesehen sind, und das Anbauteil mittels einer Klemmpaarung mit wenigstens einem einer in Bezug zu einer Zustellrichtung eines Klemmteiles der Klemmpaarung schiefwinkligen Klemmfläche mit den zweiten Anlageflächen auf den ersten Anlageflächen des Halteansatzes festlegbar ist. Durch die in einem Winkel stehenden ersten Anlageflächen an dem Halteansatz und die dazu korrespondierenden zweiten Anlageflächen an dem Anbauteil wird das Anbauteil vorausgerichtet, während die eigentliche Bewegung in die abschließende Sollposition durch die Klemmbewegung der Klemmpaarung erzwungen wird, wodurch das Anbauteil zu einer Relativbewegung zu dem Halteansatz gezwungen wird. Dabei wird das Anbauteil aufgrund der schiefwinkligen Ausrichtung der Klemmfläche des Klemmteiles der Klemmpaarung mit den zweiten Anlageflächen bevorzugt senkrecht auf die ersten Anlageflächen des Halteansatzes zu bewegt und wird zusätzlich auch parallel zu den Anlageflächen des Halteansatzes in die Sollposition bewegt. Optional kann bei einer entsprechenden Genauigkeit der Anlageflächen und der Formgebung der Klemmpaarung die Befestigung des Anbauteils in der Sollposition durch einen einzigen Bewegungsvorgang, nämlich durch eine Relativbewegung der zueinander bewegbaren Teile der Klemmpaarung bewirkt werden. Die Genauigkeit der Istposition in Bezug zu der vorgegebenen Sollposition ist dabei bei beiden Bewegungsvorgängen identisch.

Das Auffinden der Sollposition kann besonders einfach gestaltet werden, wenn die ersten und die zweiten Anlageflächen in der Sollposition des Anbauteils parallel zu der Zustellrichtung verlaufen. Durch die zu der Zustellrichtung parallel verlaufenden Anlageflächen erfolgt die Zustell- bzw. Lösebewegung des Klemmteils parallel zu dem Verlauf der Anlageflächen, so dass die durch die Klemmpaarung erzwungene Relativbewegung vektoriell eindeutig in einen Anteil einer Bewegung parallel zu den Anlageflächen und einen Anteil senkrecht zu den Anlageflächen zerlegt werden kann. Die Sollposition kann dadurch besonders einfach aufgefunden werden, indem die Teile der Klemmpaarung so geformt und zu den Anlageflächen angeordnet sind, dass das Anbauteil mit den zweiten Anlageflächen genau so auf die ersten Anlageflächen zu bewegt wird, dass die Bewegung genau in der Sollposition durch Formschlüssigkeit zwischen den Anlageflächen gestoppt wird. Da sowohl der Halteansatz als auch das Anbauteil aus einem formstabilen Werkstoff, wie z.B. Stahl, mit einer für den Bereich der wirkenden Anpresskräfte vernachlässigbaren Elastizität ausgebildet sind, wird die Sollposition dadurch mit einer sehr hohen Genauigkeit aufgefunden, ohne dass dazu ein besonders aufwendiger Einstellvorgang erforderlich ist, oder dass Elastizitäten der beteiligten Bauteile die Genauigkeit der Befestigungsbewegung nachteilig beeinflussen.

Weiter wird vorgeschlagen, dass das Klemmteil durch eine Schraubverbindung mit dem Anbauteil oder dem Halteansatz verbunden ist, und das Klemmteil durch eine im Querschnitt runde Stange gebildet ist, welche durch die Schraubverbindung eine durch eine Drehbewegung erzwungene axiale Zustellbewegung in die erste Richtung ausführt. Durch die Schraubverbindung kann die Zustellbewegung des Klemmteils in ihrem Verlauf besonders kontrolliert verwirklicht werden. Außerdem kann die Schraubverbindung als Untersetzung genutzt werden, so dass größere Halte- bzw. Anpresskräfte erzeugt werden können. Ferner kann die Schraubverbindung selbsthemmend ausgebildet sein, so dass eine Rückstellbewegung des Anbauteils z.B. aufgrund von Maschinenvibrationen aus der Sollposition über die Schraubverbindung verhindert werden kann.

Weiter wird vorgeschlagen, dass das Klemmteil durch eine im Querschnitt runde Stange gebildet ist, welche während der Bewegung in Montagerichtung gleichzeitig eine Drehbewegung um ihre Längsachse ausführt. Durch die vorgeschlagene Weiterbildung der Erfindung kann das Klemmteil eine rotatorische Bewegung ausführen, welche durch eine Schraubverbindung in eine axiale Vorschubbewegung des Klemmteils umgewandelt wird. Weiter wird vorgeschlagen, dass das Klemmteil in einer Führung geführt ist. Durch die Führung kann sich das Klemmteil während der Vorschubbewegung an einer Gegenfläche abstützen, so dass es während der Ausübung der Anpresskraft auf das jeweilige andere Teil der Klemmpaarung nicht seitlich ausweichen kann. Die Führung ist dabei bevorzugt unmittelbar angrenzend bzw. mit einem geringstmöglichen Abstand zu der Kontaktfläche des Klemmteils an dem jeweiligen anderen Teil der Klemmpaarung angeordnet, so dass sich günstige Hebelverhältnisse erzielen lassen.

Insbesondere kann das Klemmteil an seiner Stirnseite einen Konus aufweisen. Der Konus kann durch einen Kegel oder einen Kegelstumpf an der Stirnseite des Klemmteils gebildet sein. Durch den Konus kann die Zustellbewegung des Klemmteils besonders einfach in die gewünschte Bewegung des Anbauteils in die Sollposition umgewandelt werden, wobei ein Kegel oder Kegelstumpf besonders günstig ist, wenn das Klemmteil als runde Stange ausgebildet ist und während der Zustellbewegung eine Drehbewegung ausführt.

Eine besonders genaue und einfache Bewegung des Anbauteils in die Sollposition kann dadurch bewirkt werden, wenn die Klemmpaarung durch zwei in einem Winkel zueinander angeordnete, im Querschnitt runde Stangen gebildet ist, welche in einer Punktberührung aneinander anliegen, wobei eine der Stangen dem Halteansatz und eine der Stangen dem Anbauteil zugeordnet ist.

Dabei kann an dem Halteansatz oder an dem Anbauteil ein Schlitz vorgesehen sein, in den das jeweils andere Teil mit der ersten oder zweiten Stange einführbar ist, wobei die dem Halteansatz oder dem Anbauteil zugeordnete andere erste oder zweite Stange durch eine Zustellbewegung in den Schlitz einführbar ist, und das Anbauteil durch eine klemmende Anlage der zweiten Stange an der in die Schlitz eingeführten ersten Stange auf dem Halteansatz festlegbar ist. Die zweite Stange ist in dem Halteansatz oder dem Anbauteil, in dem der Schlitz vorgesehen ist, geführt und wird durch eine Zustellbewegung auf die in den Schlitz eingeführte erste Stange zu bewegt und gelangt schließlich an dieser zur Anlage, und zwar an der Seite, dass die weitere Zustellbewegung der zweiten Stange das Anbauteil in Richtung des Halteansatzes der Maschine drängt. Dazu kann an der Stirnseite der zweiten Stange der vorgeschlagene Konus angeordnet sein.

Alternativ wird vorgeschlagen, dass die Klemmpaarung durch zwei in einem Winkel zueinander angeordnete Klemmteile gebildet ist, wobei eines der Klemmteile durch eine im Querschnitt runde Stange gebildet ist, und eines der Klemmteile eine ebene Klemmfläche aufweist, und dass die Stange in einem linienförmigen Kontakt an der Klemmfläche anliegt. Durch die vorgeschlagene Weiterbildung der Erfindung kann die Anpresskraft im Bereich der Kontaktfläche und die Genauigkeit der Zustellbewegung weiter erhöht werden.

Eine besonders präzise Festlegung des Anbauteils und Definition der Sollposition kann dadurch verwirklicht werden, indem die ersten Anlageflächen an dem Halteansatz in einem Winkel von 170 bis 20 Grad, bevorzugt in einem Winkel von 100 bis 80 Grad und besonders bevorzugt in einem Winkel von 90 Grad zueinander angeordnet sind.

Die Erfindung ist von besonderem Vorteil, wenn das Anbauteil Teil einer auswechselbaren Auskämmeinrichtung mit einer Mehrzahl von einzelnen Auskämmern ist, welche einer Transporttrommel der Maschine zugeordnet ist. Grundsätzlich müssen die Auskämmer in einer sehr präzisen Ausrichtung zu den Mulden der Transporttrommel angeordnet und ausgerichtet sein. Diese Ausrichtung der Auskämmer musste bei der im Stand der Technik bekannten Lösung nach dem Austausch der Auskämmeinrichtung zeitaufwendig jeweils einzeln eingestellt werden. Durch die vorgeschlagene Lösung können die Auskämmer an der Auskämmeinrichtung, sofern überhaupt erforderlich, einmalig eingestellt werden und müssen anschließend nicht mehr nachjustiert werden. Wird die Auskämmeinrichtung anschließend ausgetauscht, erfolgt dies durch Lösen und anschließendes Festlegen des Anbauteils über die konische Klemmpaarung, wobei die Auskämmer ihre Anordnung und Ausrichtung relativ zu der Auskämmeinrichtung beibehalten und dementsprechend nicht mehr eingestellt werden müssen. Die konische Klemmpaarung bildet praktisch eine neue zentrale Schnittstelle zum Wechseln der gesamten Auskämmeinrichtung.

Weiter wird vorgeschlagen, dass an dem Anbauteil und/oder an dem Halteansatz ein die Sollposition des Anbauteils zu dem Haltansatz definierender Anschlag vorgesehen ist. Durch den Anschlag kann die Sollposition unabhängig von der Klemmpaarung definiert werden. Die Klemmpaarung dient damit nur zur Bewegung des Anbauteils zu dem Halteansatz und zum Aufbringen der erforderlichen Haltekräfte des Anbauteils auf dem Halteansatz.

Ferner ist gemäß dem Grundgedanken der Erfindung eine Befestigungseinrichtung für ein Anbauteil auf einem Halteansatz einer Maschine der Tabak verarbeitenden Industrie vorgeschlagen, wobei an dem Halteansatz zwei in einem Winkel zueinander stehende erste Anlageflächen, und an dem Anbauteil zwei in einem Winkel zueinander stehende korrespondierende zweite Anlageflächen vorgesehen sind, und das Anbauteil mittels einer konischen Klemmpaarung mit den zweiten Anlageflächen auf den ersten Anlageflächen des Halteansatzes festlegbar ist. Durch die vorgeschlagene Befestigungseinrichtung können beliebige Anbauteile mit einer sehr hohen Lagegenauigkeit und einem sehr einfachen Befestigungsvorgang an der Maschine befestigt werden.

Die Erfindung wird im Folgenden anhand bevorzugter Ausführungsformen unter Bezugnahme auf die beigefügten Figuren erläutert. Dabei zeigt:
- Fig. 1:: eine Halteeinrichtung mit einem Halteansatz und einem daran gehaltenen Anbauteil;

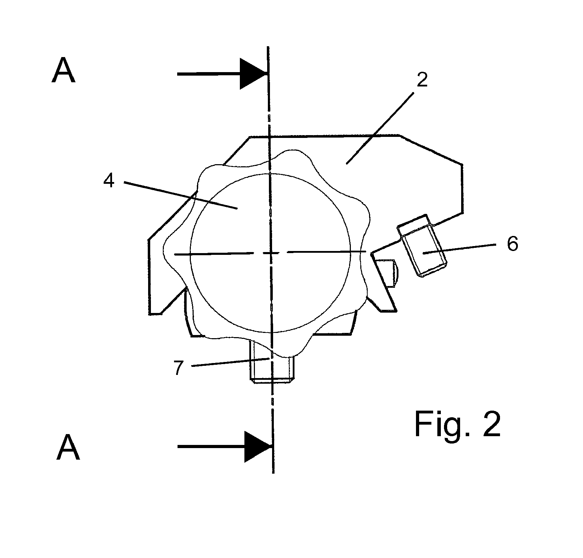

- Fig. 2:: die Halteeinrichtung in Sicht auf ein zur Befestigung des Anbauteiles vorgesehenen Handrad;

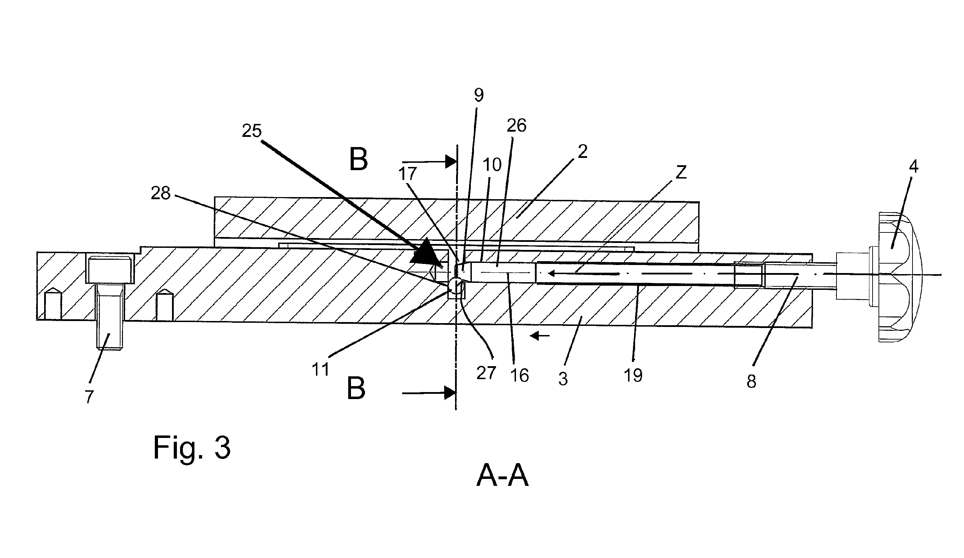

- Fig. 3:: eine Schnittdarstellung der Halteeinrichtung entlang der Schnittrichtung A-A aus der Fig. 2;

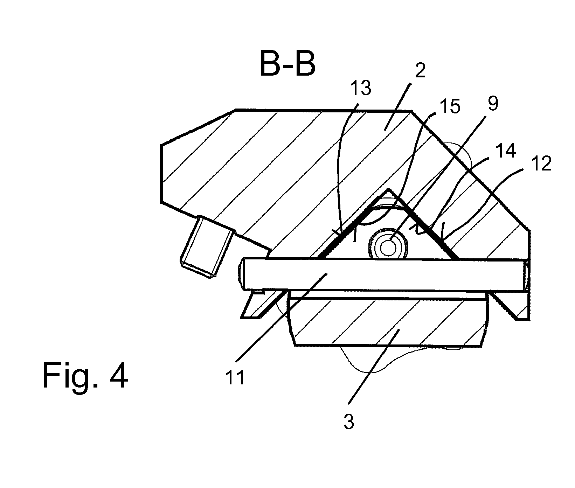

- Fig. 4:: eine Schnittdarstellung der Halteeinrichtung entlang der Schnittrichtung B-B aus der Fig. 3; und
- Fig. 5:: eine Transporttrommel mit einer Auskämmeinrichtung.

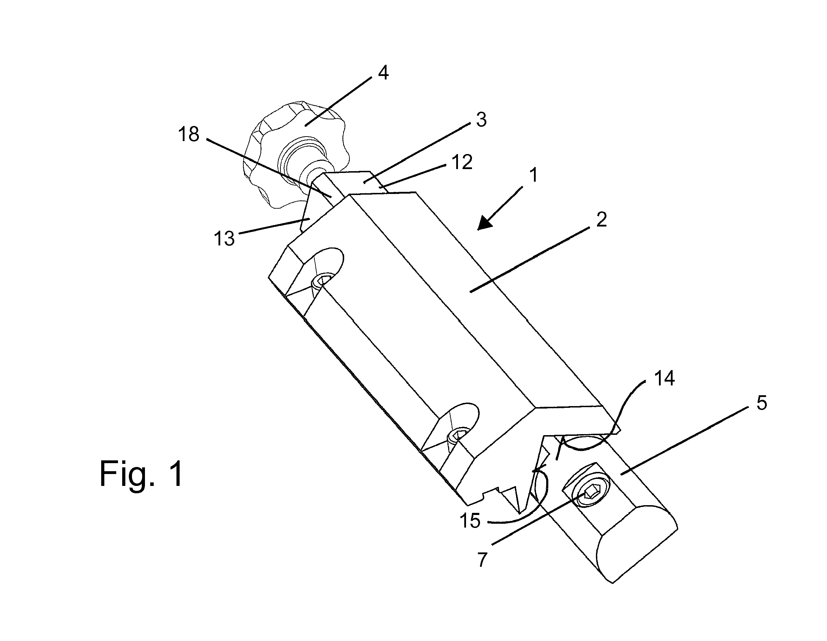

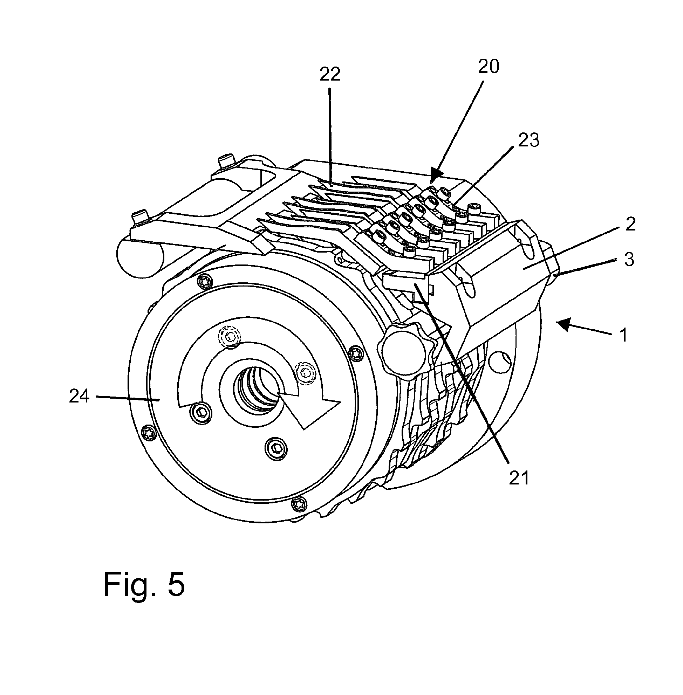

In der Fig. 1 ist eine Befestigungseinrichtung 1 für ein Anbauteil 2 auf einem einer Maschine der Tabak verarbeitenden Industrie zugeordneten Halteansatz 3 zu erkennen. Das Anbauteil 2 ist nur als ein Musterteil dargestellt und kann durch eine Sensoreinrichtung, ein Abdeckteil, eine Auskämmeinrichtung 20, wie in der Fig. 5 dargestellt, eine Leimdüse, ein Behälter, einen Abschläger, d.h. im weitesten Sinne durch ein beliebiges Teil oder eine beliebige Baugruppe gebildet sein, welche(s) in einer vorbestimmten Sollposition an der Maschine, bzw. zu den Bauteilen der Maschine angeordnet und ausgerichtet sein muss. Das Anbauteil 2 kann dabei einstückig an eine Baugruppe angeformt oder auch ein Bauteil einer übergeordneten Baugruppe sein.

Der Halteansatz 3 ist als eine längliche Strebe mit einem Befestigungsabschnitt 5 zur Befestigung des Halteansatzes 3 an der Maschine ausgebildet. In dem Befestigungsabschnitt 5 ist eine Bohrung mit einer darin angeordneten Befestigungsschraube 7 vorgesehen, mit welcher der Halteansatz 3 an der Maschine befestigt ist. Damit der Halteansatz 3 positionsgenau an der Maschine befestigt wird, weist dieser besonders gearbeitete, nicht näher bezeichnete Befestigungsflächen und Anschläge auf, welche eine Befestigung des Halteansatzes 3 in ausschließlich einer Ausrichtung und Position an der Maschine ermöglichen. An dem Halteansatz 3 sind ferner zwei in einem Winkel von 90 Grad zueinander ausgerichtete erste Anlageflächen 12 und 13 vorgesehen, welche in Längsrichtung des Halteansatzes 3 parallel zueinander verlaufen. Die Anlageflächen 12 und 13 sind an ihren oberen Randseiten über einen Steg 18 miteinander verbunden, welcher jeweils einen Winkel von 135 Grad mit den ersten Anlageflächen 12 und 13 einschließt. Ferner ist in dem Halteansatz 3 eine Bohrung 19 mit einem Innengewindeabschnitt und einer Führung 10 vorgesehen. Die Bohrung 19 mündet mit der Führung 10 in einen quer zu den ersten Anlageflächen 12 und 13 verlaufenden Schlitz 17, wobei sich die Bohrung 19 in einem kurzen Abschnitt in der gegenüberliegenden Wandung des Schlitzes 17 fortsetzt.

Das Anbauteil 2 weist ebenfalls zwei korrespondierende in einem Winkel von 90 Grad zueinander ausgerichtete zweite Anlageflächen 14 und 15 auf, welche in einer Richtung parallel zueinander verlaufen und unmittelbar aneinander angrenzen, also eine im Querschnitt dreiecksförmige Ausnehmung bilden. Ferner weist das Anbauteil 3 ebenfalls eine Befestigungsschraube 6 auf, an der eine Baugruppe, wie z.B. ein Haltesteg 21 der in der Fig. 5 dargestellten Auskämmeinrichtung 20 oder eine Sensoreinrichtung, befestigbar ist. Das dargestellte Anbauteil 2 ist damit nur als ein Teil zur Befestigung der übergeordneten Baugruppe zu verstehen, es kann aber auch einstückig an ein Teil der Baugruppe angeformt sein. An dem Anbauteil 2 ist ferner eine erste quer, vorzugsweise senkrecht, zu den Anlageflächen 14 und 15 verlaufende, im Querschnitt rund ausgebildete erste Stange 11 vorgesehen.

Das Anbauteil 2 wird zur Befestigung auf dem Halteansatz 3 in einem ersten Schritt mit der ersten Stange 11 in den Schlitz 17 eingeführt. Anschließend wird eine zweite Stange 16 in die Bohrung 19 eingeführt und mit einem Außengewinde in dem Innengewindeabschnitt der Bohrung 19 verschraubt. Der Außengewindeabschnitt der zweiten Stange 16 bildet zusammen mit dem Innengewindeabschnitt der Bohrung 19 eine Schraubverbindung 8. Ferner weist die zweite Stange 16 an ihrem stirnseitigen Ende einen Konus 9 auf, mit dem sie in die Führung 10 der Bohrung 19 eingreift. Außerdem weist die zweite Stange 16 ein Handrad 4 zur Erleichterung einer manuellen Handhabung der Befestigungseinrichtung 1 auf.

Zur weiteren Befestigung des Anbauteils 2 wird die zweite Stange 16 weiter eingeschraubt, bis diese mit dem Konus 9 zur Anlage an der den zweiten Anlageflächen 14 und 15 des Anbauteiles 2 zugewandten Seite der ersten Stange 11 zur Anlage gelangt. Aufgrund der konischen Formgebung des Konus 9 wird das Anbauteil 2 dann während der weiteren Einschraubbewegung der zweiten Stange 16 mit den zweiten Anlageflächen 14 und 15 auf die ersten Anlegflächen 12 und 13 gedrängt, bis eine weitere Zustellbewegung durch einen Anschlag der ersten Stange 11 an der seitlichen Wandung des Schlitzes 17 nicht mehr möglich ist. Die erste Stange 11 und die zweite Stange 16 bilden in diesem Ausführungsbeispiel eine erfindungsgemäße Klemmpaarung 25, wobei die zweite Stange 16 ein in einer Zustellrichtung Z bewegbares Klemmteil 26 mit einer an der Stirnseite an dem Konus 9 angeordneten schiefwinkligen Klemmfläche 27 ist und die zweite Stange 11 die Gegenklemmfläche ausbildet. Unter dem Begriff schiefwinklig sollen alle Winkel zu der Zustellrichtung Z zwischen 0 und 90 Grad verstanden werden, durch welche die Zustellbewegung in die gewünschte Klemmbewegung umwandelbar ist. Die seitliche Wandung des Schlitzes 17 bildet einen formschlüssigen Anschlag 28, der die Sollposition definiert, während die Klemmpaarung 25 nur zur Verwirklichung der Zustellbewegung und zum Aufbringen der Haltekräfte dient.

Wichtig für die erfindungsgemäße Lösung ist ferner, dass die ersten Anlagefläche 12 und 13 und die dazu korrespondierenden zweiten Anlageflächen 14 und 15 an dem Anbauteil 2 eine identische Ausrichtung und Zuordnung zueinander aufweisen, damit das Anbauteil 3 flächig an dem Halteansatz 3 anliegt. Dabei ist es insbesondere wichtig, dass die Anlageflächen 12 und 13 an dem Halteansatz 3 über den Steg 18 miteinander verbunden sind und nicht unmittelbar aneinandergrenzen, so dass zwischen den zweiten Anlageflächen 14 und 15 und den ersten Anlageflächen 12 und 13 im Bereich der Kehle ein kleiner Freiraum gebildet wird, in welchen Partikel aufgenommen werden können, so dass die Partikel oder ein größerer Radius im Übergang der zweiten Anlageflächen 14 und 15 nicht zu einer Veränderung der Position des Anbauteiles 2 auf dem Halteansatz 3 führen kann. Außerdem wird durch den Winkel von 90 Grad der Anlageflächen 12 und 13 zueinander die winklige Ausrichtung des Anbauteils 2 auf dem Halteansatz 3 und damit auch gegenüber der Maschine und den daran gehaltenen weiteren Baugruppen definiert.

Für die erfindungsgemäße Lösung ist es von besonderem Vorteil, dass die zweite Stange 16 im Querschnitt rund ausgebildet und an ihrer Stirnseite mit einem Konus 9 versehen ist. Dadurch kann die zweite Stange 16 eine Drehbewegung ausführen, welche zudem durch die Schraubverbindung 8 in eine axiale Vorschubbewegung umgewandelt wird. Die axiale Vorschubbewegung bildet wiederum die Zustellbewegung, welche durch den Konus 9 in eine schräge Zustellbewegung des Anbauteiles 2 zu dem Halteansatz 3 in die Sollposition umgewandelt wird. Die schräge Zustellbewegung des Anbauteiles 2 ist gebildet durch eine Kombination aus einer Anpressbewegung des Anbauteiles 2 senkrecht zu den ersten Anlageflächen 12 und 13 des Halteansatzes 3 und einer Bewegung des Anbauteiles 2 parallel zu den ersten Anlageflächen 12 und 13 des Halteansatzes 3. Durch eine entsprechende Form- und Lagegenauigkeit der Anlageflächen 12,13,14 und 15, der ersten Stange 11 des Anbauteiles 2 und des Konus 9 der zweiten Stange 16 in Verbindung mit entsprechend geringen Elastizitäten der beteiligten Bauteile und dem vorgesehenen Anschlag 28 kann die Sollposition sehr genau definiert werden. Ferner erfolgt das Auffinden der Sollposition durch die Zustellbewegung des Konus 9 bzw. durch die Drehbewegung der zweiten Stange 16 praktisch selbsttätig.

Die erste und zweite Stange 11 und 16 bilden zusammen bei diesem Ausführungsbeispiel die Klemmpaarung 25, wobei die zweite Stange 16 in diesem Fall das bewegbare Klemmteil 26 der Klemmpaarung 25 bildet. Bei der Klemmpaarung 25 können der Konus 9 bzw. die schiefwinklige Klemmfläche 27 allgemein an beiden Teilen der Klemmverbindung vorgesehen sein, wichtig ist nur, dass die Relativbewegung der beiden Teile der Klemmverbindung 25 durch den Konus 9 bzw. die schiefwinklige Klemmfläche 27 in die zur Befestigung des Anbauteils 2 erforderliche Klemmbewegung umgewandelt wird. Der Erfindungsgedanke umfasst demnach jegliche Paarungen von Klemmverbindungen oder Keilverbindungen, welche dazu geeignet sind, eine axiale Zustellbewegung in eine halbaxiale Klemmbewegung umzuwandeln.

Die Befestigung, insbesondere die Selbsthemmung der Schraubverbindung 8 und die Winkel der Klemmflächen der Klemmpaarung 25, sollte dabei so ausgelegt werden, dass sich insgesamt eine selbsthemmende Verbindung ergibt, so dass das Anbauteil 2 maximal fixiert auf dem Halteansatz 3 befestigt ist.

In der Fig. 5 ist eine Transporttrommel 24 zum Transport der Produkte zu erkennen, welche an ihrer radial äußeren Mantelfläche eine Vielzahl von mit Unterdruck beaufschlagbaren Mulden aufweist. Ferner ist der Transporttrommel 24 eine Auskämmeinrichtung 20 zugeordnet, welche durch die erfindungsgemäße Schnellbefestigung mittels eines Anbauteils 2 auf einem maschinenfesten Halteansatz 3 befestigt ist. Die Auskämmeinrichtung 20 umfasst einen Haltesteg 21, mit dem sie an dem Anbauteil 2 befestigt ist, und an dem eine Mehrzahl von Auskämmern 22 über einstellbare Befestigungen 23 gehalten sind. Die Auskämmer 22 werden einmalig zu dem Haltesteg 21 und damit auch indirekt zu den vorbei geführten Mulden der Transporttrommel 24 ausgerichtet. Die Auskämmeinrichtung 20 bildet dann zusammen mit den Auskämmern 22, dem Haltesteg 21 und dem Anbauteil 2 eine Baugruppe mit einer festen räumlichen Zuordnung der Bauteile zueinander, welche über das Anbauteil 2 auf dem Halteansatz 3 befestigt ist. Zum Wechseln der Auskämmeinrichtung 20 muss das Anbauteil 2 nur durch Lösen des Handrades 4 von dem Halteansatz 3 demontiert werden und kann anschließend nach dem oben beschriebenen Befestigungsvorgang des Anbauteiles 2 als Baugruppe durch einen einzigen Montagevorgang wieder auf dem Halteansatz 3 befestigt werden, ohne dass dabei die räumliche Zuordnung der Bauteile zueinander verloren geht. Dabei ist es von besonderer Bedeutung, dass die Auskämmer 22 anschließend wieder genau in der voreingestellten Ausrichtung und Anordnung zu den Mulden der Transporttrommel 24 angeordnet sind und nicht mehr einzeln eingestellt werden müssen. Die Befestigung des Anbauteiles 2 auf dem Halteansatz 3 bildet eine zentrale lösbare Schnittstelle, durch welche der Wechselvorgang erheblich vereinfacht und verkürzt werden kann. Dabei wird das Anbauteil 2 zusammen mit den anderen Bauteilen der Auskämmeinrichtung 20 in einer schräggerichteten Montagebewegung, gebildet aus einer Kombination einer Axialbewegung in Längsrichtung des Halteansatzes 3 und einer Bewegung senkrecht zu der Längserstreckung des Halteansatzes 3, in Richtung der Transporttrommel 24 in die Sollposition bewegt.

Der Verlauf der Montagebewegung des Anbauteils 2 zu dem Halteansatz 3 wird allein durch die Form, die Bemessung, die Ausrichtung, die Anordnung und die Relativbewegung der Teile der Klemmpaarung 25 zueinander bestimmt, während die Sollposition durch die Anlageflächen 12,13,14 und 15 an dem Anbauteil 2 und an dem Halteansatz 3 und den Anschlag 28 bestimmt ist.

## Patentansprüche

1. Maschine der Tabak verarbeitenden Industrie mit
- wenigstens einem daran in einer vorbestimmten Sollposition gehaltenen Anbauteil (2),
**dadurch gekennzeichnet, dass**
- ein der Maschine zugeordneter Halteansatz (3) mit zwei in einem Winkel zueinander stehenden ersten Anlageflächen (12,13) vorgesehen ist, und
- an dem Anbauteil (2) zwei in einem Winkel zueinander stehende, mit den ersten Anlageflächen (12,13) korrespondierende zweite Anlageflächen (14,15) vorgesehen sind, und
- das Anbauteil (2) mittels einer Klemmpaarung (25) mit wenigstens einer in Bezug zu einer Zustellrichtung (Z) eines Klemmteils (26) der Klemmpaarung (25) schiefwinkligen Klemmfläche (27) mit den zweiten Anlageflächen (14,15) auf den ersten Anlageflächen (12,13) des Halteansatzes (3) festlegbar ist.

2. Maschine nach Anspruch 1, **dadurch gekennzeichnet, dass**
- die ersten und die zweiten Anlageflächen (12,13,14,15) in der Sollposition parallel zu der Zustellrichtung verlaufen.

3. Maschine nach Anspruch 2, **dadurch gekennzeichnet, dass**
- das Klemmteil (26) durch eine Schraubverbindung (8) mit dem Anbauteil (2) oder dem Halteansatz (3) verbunden ist, und
- das Klemmteil (26) durch eine im Querschnitt runde Stange (16) gebildet ist, welche durch die Schraubverbindung (8) eine durch eine Drehbewegung erzwungene axiale Zustellbewegung in die Zustellrichtung (Z) ausführt.

4. Maschine nach einem der Ansprüche 2 oder 3, **dadurch gekennzeichnet, dass**
- das das Klemmteil (26) in einer Führung (10) geführt ist.

5. Maschine nach einem der Ansprüche 2 bis 4, **dadurch gekennzeichnet, dass**
- das Klemmteil (26) an seiner Stirnseite einen Konus (9) aufweist.

6. Maschine nach einem der vorangegangenen Ansprüche, **dadurch gekennzeichnet, dass**
- die Klemmpaarung (25) durch zwei in einem Winkel zueinander angeordnete, im Querschnitt runde Stangen (11,16) gebildet ist, welche in einer Punktberührung aneinander anliegen, wobei eine erste Stange (11) dem Halteansatz (3) und eine zweite Stange (16) dem Anbauteil (2) zugeordnet ist.

7. Maschine nach Anspruch 6, **dadurch gekennzeichnet, dass**
- an dem Halteansatz (3) oder an dem Anbauteil (2) ein Schlitz (17) vorgesehen ist, in den das jeweils andere Teil mit der ersten oder der zweiten Stange (11,16) einführbar ist, und
- die dem Halteansatz (3) oder dem Anbauteil (2) zugeordnete andere erste oder zweite Stange (11,16) durch eine Zustellbewegung in den Schlitz (17) einführbar ist, und
- das Anbauteil (2) durch eine klemmende Anlage der beiden Stangen (11,16) auf dem Halteansatz (3) festlegbar ist.

8. Maschine nach einem der Ansprüche 1 bis 5, **dadurch gekennzeichnet, dass**
- die Klemmpaarung (25) durch zwei in einem Winkel zueinander angeordnete Klemmteile (26) gebildet ist, wobei eines der Klemmteile (26) durch eine im Querschnitt runde Stange (11,16) gebildet ist, und eines der Klemmteile (26) eine ebene Klemmfläche aufweist, und dass die Stange (11,16) in einem linienförmigen Kontakt an der Klemmfläche anliegt.

9. Maschine nach einem der vorangegangenen Ansprüche, **dadurch gekennzeichnet, dass**
- die ersten Anlageflächen (12,13) an dem Halteansatz (3) in einem Winkel von 170 bis 20 Grad, bevorzugt in einem Winkel von 100 bis 80 Grad und besonders bevorzugt in einem Winkel von 90 Grad zueinander angeordnet sind.

10. Maschine nach einem der vorangegangenen Ansprüche, **dadurch gekennzeichnet, dass**
- das Anbauteil (2) Teil einer auswechselbaren Auskämmeinrichtung (20) mit einer Mehrzahl von einzelnen Auskämmern (22) ist, welche einer Transporttrommel (24) der Maschine zugeordnet ist.

11. Maschine nach einem der vorangegangenen Ansprüche, **dadurch gekennzeichnet, dass**
- an dem Anbauteil (2) und/oder an dem Halteansatz (3) ein die Sollposition des Anbauteils (2) zu dem Haltansatz (3) definierender Anschlag (28) vorgesehen ist.

12. Befestigungseinrichtung (1) für ein Anbauteil (2) auf einem Halteansatz (3) einer Maschine der Tabak verarbeitenden Industrie, **dadurch gekennzeichnet, dass**
- an dem Halteansatz (3) zwei in einem Winkel zueinander stehende erste Anlageflächen (12,13), und
- an dem Anbauteil (2) zwei in einem Winkel zueinander stehende korrespondierende zweite Anlageflächen (14,15) vorgesehen sind, und
- das Anbauteil (2) mittels einer konischen Klemmpaarung mit den zweiten Anlageflächen (14,15) auf den ersten Anlageflächen (12,13) des Halteansatzes (3) festlegbar ist.

13. Befestigungseinrichtung (1) nach Anspruch 12, **dadurch gekennzeichnet, dass** die Befestigungseinrichtung (1) nach einem der kennzeichnenden Merkmalen der Ansprüche 2 bis 11 ausgebildet ist.
